# FASCICULE DE BREVET EUROPEEN

(11) **EP 0 807 142 B1**
(45) Date de publication et mention de la délivrance du brevet: **10.10.2001**
(21) Numéro de dépôt: 96903041.0
(22) Date de dépôt: 02.02.1996
(51) Int. Cl.: C08J 7/18

(54) **METHODE ET COMPOSITION PHOTOPOLYMERISABLE DE PROTECTION DE GLACES EN MATIERE PLASTIQUE POUR PROJECTEURS DE VEHICULES**
VERFAHREN UND PHOTOPOLYMERISIERBARE ZUSAMMENSETZUNG ZUM SCHÜTZEN VON KUNSTSTOFFGLÄSERN FÜR KRAFTFAHRZEUGSCHEINWERFER
METHOD AND PHOTOPOLYMERIZABLE COMPOSITION FOR PROTECTING THE PLASTIC MADE GLASS OF THE HEADLIGHTS OF VEHICLES

(30) Priorité: 02.02.1995 FR 9501235
(43) Date de publication de la demande: 19.11.1997
(73) Titulaire: BASF Coatings AG, 48165 Münster (DE); MAGNETI MARELLI S.p.A., 20145 Milano (IT)
(72) Inventeur: LEPORE, Santo, I-10144 Turin (IT); ALLARD, Maxime, F-67120 Dachstein (FR)
(74) Mandataire: Giraud, Françoise
(86) Numéro de dépôt international: FR9600177
(87) Numéro de publication internationale: WO9623836

(56) Documents cités:
- EP-A- 0 002 676
- EP-A- 0 445 570
- DATABASE WPI Derwent Publications Ltd., London, GB; AN 85-002810[01] & JP,A,59 202 229 (SUMITOMO BAKELITE KK) , 16 Novembre 1984
- DATABASE WPI Derwent Publications Ltd., London, GB; AN 90-235369[31] & JP,A,02 163 134 (MITSUBISHI RAYON KK) , 22 Juin 1990
- PATENT ABSTRACTS OF JAPAN vol. 012 no. 455 (C-548) ,29 Novembre 1988 & JP,A,63 178145 (KANTO SEIKI CO. LTD.) 19 Novembre 1987,

## Description

La présente invention concerne une méthode pour protéger contre les éraflures et les intempéries des glaces pour projecteurs de véhicules réalisées en matière plastique synthétique, notamment en polycarbonate. L'invention concerne en outre une composition polymérisable utilisable en particulier dans cette méthode.

Il est connu que les glaces pour projecteurs de véhicules doivent avoir un rendement optique optimal, une transparence élevée, une aptitude à un façonnage facile afin que l'on puisse les conformer de n'importe quelle façon voulue, une bonne robustesse et un poids convenable. Toutes ces caractéristiques ne peuvent pas être obtenues avec les glaces traditionnelles en verre. La tendance actuelle est donc de remplacer les glaces de verre par des glaces réalisées en matières plastiques, qui sont plus légères et susceptibles d'un façonnage plus aisé. Un matériau optimal de ce point de vue est le polycarbonate qui présente en outre des caractéristiques optiques égales ou presque à celles du verre.

Toutefois, ainsi qu'il est connu, le polycarbonate est un matériau particulièrement tendre et donc susceptible de subir facilement des éraflures, ce qui donne lieu à une réduction des caractéristiques optiques de la glace. En outre, l'exposition prolongée à la lumière solaire, aux intempéries et/ou aux agents chimiques peut en produire le vieillissement, ce qui le rend fragile, et surtout entraîne un jaunissement et une perte de transparence de la glace.

Dans le but de résoudre ces problèmes, les glaces pour projecteurs réalisées en polycarbonate (ou autres matières plastiques similaires) doivent être protégées, au moins sur leur surface extérieure qui reste exposée pendant l'usage, par l'application de vernis transparents spéciaux.

Une première possibilité consiste à utiliser des compositions basées sur des systèmes de polymérisation polyester-acrylates de type mélamine ou siloxanes autoréticulants, c'est-à-dire des compositions qui, après polymérisation, créent sur la glace un film de dureté élevée qui, par conséquent, la protège très bien contre les éraflures et contre l'usure due au frottement de la poussière atmosphérique. Toutefois, justement à cause de sa dureté élevée, la couche protectrice doit avoir une épaisseur réduite (5 à 8 microns) et doit être appliquée, non pas directement sur la glace, mais sur une couche intermédiaire plus flexible. Ceci entraîne une complication dans le procédé de fabrication, et surtout de graves inconvénients mécaniques.

Par ailleurs, les glaces de projecteurs supportent également de fréquents chocs thermiques dus à des variations de température de la glace qui s'échauffe soudainement lorsqu'on allume le projecteur, pour se refroidir tout aussi brusquement, spécialement en hiver lorsque l'on éteint le projecteur et que la glace revient à la température ambiante.

La dureté élevée et l'épaisseur réduite du film protecteur sont donc la cause d'une faible résistance à ces chocs thermiques, avec la conséquence que ce film, pendant l'usage, peut facilement se fissurer en annulant la protection chimique du matériau sous-jacent. Dans ce cas, le nettoyage par des solvants peut provoquer un détachement du vernis protecteur à la suite de l'attaque du support. En outre, l'épaisseur réduite offre une protection insuffisante vis-à-vis de la lumière solaire et de ses effets vieillissants.

Une deuxième possibilité, qui pallie les inconvénients décrits, est d'utiliser comme vernis protecteurs des compositions polymériques flexibles dites "autocicatrisantes", bien connues sous forme de vernis bicomposants polyuréthane à réticulation tridimensionnelle, obtenus par mélange d'un prépolymère polyisocyanate avec un polyol. Ces produits permettent de réaliser des couches protectrices d'une épaisseur de 24 à 40 microns en assurant une protection meilleure contre les agressions chimiques en cas de fissuration superficielle et permettent d'incorporer dans la composition des filtres UV et d'autres substances photo-absorbantes et photoinhibitrices, qui ralentissent ou éliminent totalement les processus de vieillissement du matériau de base, en assurant ainsi le maintien des caractéristiques optiques optimales dans le temps.

Toutefois, cette solution peut également présenter des inconvénients liés principalement aux temps importants de polymérisation de ces substances, qui sont compris entre 45 et 70 minutes à 110/120°, malgré la présence dans la composition d'accélérateurs organométalliques. En outre, l'étape thermoplastique est elle aussi particulièrement longue, étant liée à l'évaporation des solvants nécessaires à l'application et à la formation du polymère, ce qui rend nécessaire au moins 10 minutes d'attente supplémentaire avant l'introduction dans le four pour la polymérisation proprement dite.

Il est évident que ces temps importants sont incompatibles avec des cycles de fabrication de produits en grande série, tels que les projecteurs pour véhicules. En outre, la forte quantité de solvants utilisée peut donner lieu à des attaques partielles du polycarbonate de la glace accompagnées d'un jaunissement et la réduction des qualités optiques qui en découlent.

Le but de l'invention est de fournir une méthode de protection des glaces en plastique pour projecteurs de véhicules qui ne présente pas les inconvénients décrits, en permettant notamment de concilier une protection mécanique et chimique élevée de la glace avec des temps réduits d'application et de polymérisation de la couche protectrice, et qui permette d'assurer le maintien dans le temps des caractéristiques optiques de la glace.

L'invention concerne plus précisément un procédé pour vernir une surface, en particulier une surface de projecteur en matière plastique synthétique, en particulier en polycarbonate, mettant en oeuvre une composition polymérisable autocicatrisante donc de type flexible ou souple.

En effet, comme on l'a exposé précédemment, on distingue deux sortes de vernis en fonction de leur dureté, les vernis durs et les vemis flexibles ou souples.

La protection des glaces plastiques a été initialement faite par référence au verre. Tout naturellement, on a cherché à utiliser des vernis de résistance à la rayure semblable à celle du verre, donc durs.

La dureté d'un revêtement est évaluée, suivant la norme française NFT 30016, par la mesure du temps d'amortissement d'un pendule de PERSOZ qui bat la seconde.

L'étalonnage est fait avec un verre de référence dont la dureté ne doit pas être inférieure à 420 secondes.

Les vernis de protection actuels peuvent ainsi être classés en 2 catégories :
- les vernis dits "durs", de dureté Persoz supérieure à 300 secondes, ont été les premiers vernis utilisés. Ces vernis peuvent être soit des vernis bicomposants, généralement séchés thermiquement ou des vernis dits "vernis UV" à séchage sous radiation UV. Ces vernis sont obligatoirement déposés en couche mince, généralement de 5 à 7 *µ*m. De tels vernis présentent l'inconvénient de mal supporter les tests de gravillonnage. Parmi ces vernis, les vernis durs de type UV sont utilisés pour simplifier le process de production mais les épaisseurs applicables restent encore inférieures à 15 *µ*m à cause du risque de fissuration spontané après polymérisation. De tels vernis durs de type "UV" sont, en particulier, décrits dans le brevet EP-A-0 445 570 où il apparaît qu'ils sont déposés en couche d'épaisseur de l'ordre de 4 à 15 *µ*m.
- Les vernis "souples ou flexibles" de dureté Persoz inférieure à 120 secondes sont, eux aussi, regroupés en deux familles :
   . des vernis de type polyuréthane réticulé (PUR) bicomposants à séchage thermique à des températures comprises entre 120 et 130° pendant des durées de l'ordre de 40 à 60 min,
- des vernis de type "UV" séchés sous radiation ultraviolette.

Ces vernis souples ou flexibles sont classés dans la famille des vernis dits "autocicatrisants". On peut les rayer mais les rayures "se cicatrisent" par refluage et la transparence est préservée. De tels vernis présentent l'avantage de résister au gravillonnage et de rester ainsi transparents.

En effet, après impact, les vernis plus durs laissent une marque blanche de cassure superficielle et le phare perd progressivement sa transparence et sa fonction d'éclairage. Les vernis souples, quant à eux, doivent être appliqués en couche plus épaisse pour assurer cette fonction amortisseur des gravillons. Ainsi, les épaisseurs des couches de vernis souples sont généralement supérieures à 25 *µ*m et peuvent atteindre 40 *µ*m.

Le polycarbonate, du fait de sa structure est fortement sensible au jaunissement lors de l'exposition cxtérieure. Il est donc nécessaire d'introduire dans la composition du vernis des produits le rendant lui-même stable au jaunissement et à la dégradation par fissuration découlant d'une dépolymérisation des chaînes polymériques. L'addition de filtres UVB et UVA est donc obligatoire dans le vernis. Toutefois, leur concentration est limitée dans les vernis car ces absorbeurs apportent une coloration propre et, parce que du fait qu'ils sont non réactifs, ils agissent comme plastifiant, conduisant à une exsudation ou à une réduction de la résistance chimique du vernis. Par ailleurs, l'exsudation entraîne une perte de transparence. Pour une même concentration, la protection du polycarbonate est donc étroitement lice à l'épaisseur résiduelle. Cette corrélation est régie par la loi de Beer-Lambert. En d'autres termes, si l'épaisseur appliquée est faible, la concentration en filtre UV doit croître très rapidement et va affecter les performances du vernis le rendant inutilisable en polymérisation UV.

Les travaux des inventeurs de la présente invention les ont conduits à mettre au point une technique ainsi qu'une composition particulièrement adaptées à l'élaboration de couches autocicatrisantes destinées à protéger contre les éraflures et les intempéries une glace en matière plastique synthétique pour projecteurs de véhicules, en particulier une glace en polycarbonate.

Ainsi, selon un premier aspect, l'invention concerne une méthode pour protéger contre les éraflures et les intempéries une glace en matière plastique synthétique pour projecteurs de véhicules, ladite méthode comprenant les étapes de vernissage d'au moins une surface exposée de la glace avec une composition polymérisable autocicatrisante et de polymérisation de ladite composition en une couche solide, souple ou flexible et adhérente à ladite surface exposée, caractérisée en ce que ladite couche souple ou flexible présentant une dureté PERSOZ mesurée selon la norme NFT 30016 inférieure à 120 secondes, de préférence inférieure à 100 secondes, de préférence encore inférieure à 80 secondes, est obtenue à partir d'une composition polymérisable autocicatrisante monocomposante à base de polyuréthane-acrylique comprenant en outre au moins une substance photoabsorbante dans un premier intervalle prédéterminé de longueurs d'ondes, susceptible d'assurer la protection de la glace contre l'action de la lumière solaire et en ce que ladite étape de polymérisation est effectuée par photopolymérisation UV activée par exposition de ladite couche déposée sur la glace à des radiations de longueurs d'ondes comprises dans un deuxième intervalle prédéterminé de longueurs d'ondes supérieures à celles du premier intervalle.

Par "compositions monocomposantes" au sens de l'invention, on entend des compositions qui peuvent être utilisées sans l'adjonction d'un agent durcisseur au moment de leur mise en oeuvre, par opposition aux compositions classiques de polyuréthane, qui sont des compositions dites "bicomposantes" nécessitant le mélange d'une base et d'un durcisseur.

Par couche flexible ou souple au sens de l'invention, on entend comme cela ressort de l'exposé ci-dessus une couche présentant une dureté dite "dureté PERSOZ" mesurée selon la norme NFT 30016 inférieure à 120 secondes.

Selon une variante particulièrement avantageuse de l'invention, cette dureté est de préférence inférieure à 100 secondes, de préférence encore inférieure à 80 secondes.

L'épaisseur de la couche de vernis déposée selon le procédé de l'invention est d'au moins 20 µm, mesurée sur le film sec et de préférence d'au moins 25 µm.

Cette épaisseur est de préférence comprise entre 25 et 35 µm.

Selon une variante avantageuse, ladite étape de polymérisation est effectuée par irradiation de la glace et de ladite composition déposée sur celle-ci avec une lampe à mercure chargée avec de l'iodure de plomb, susceptible d'émettre des radiations de longueurs d'ondes comprises entre 365 et 415 nm, après avoir déposé sur la glace une couche d'au moins 20 microns (mesurée sur le film sec) de ladite composition polymérisable monocomposante.

Selon un deuxième aspect, l'invention concerne une composition polymérisable transparente destinée à protéger contre les éraflures et les intempéries des glaces de projecteurs de véhicules, caractérisée en ce qu'elle comprend en combinaison :
- au moins un uréthane acrylate en solution dans un monoacrylate, de préférence l'acrylate de TMP formal,
- au moins un solvant constitué par du diméthoxyméthane,
- au moins un composé photoabsorbant UV susceptible de filtrer des radiations de longueurs d'ondes comprises dans un premier intervalle prédéterminé,
- au moins un composé photoinitiateur UV activable par exposition à des radiations comprises dans un deuxième intervalle de longueurs d'ondes, les longueurs d'ondes comprises dans ledit deuxième intervalle étant supérieures à celles du premier intervalle.

De préférence, ladite composition polymérisable comprend en outre du monoacrylate de triéméthylpropane formal dans lequel les autres composants sont en solution. La fonction diluante est assurée par le diméthoxyméthane.

De cette façon, on applique sur la glace une composition protectrice de type flexible ou souple, en une couche d'épaisseur plus élevée, en évitant ainsi les inconvénients liés aux méthodes connues basées sur l'application de polymères protecteurs "durs". En même temps, puisque la composition utilisée est monocomposante et photopolymérisable, on évite tous les inconvénients liés aux méthodes connues qui font usage de compositions bicomposantes de protection flexibles à base polyuréthanique. En particulier, les temps nécessaires pour la désolvatation de la couche de vernis et pour la polymérisation de celle-ci sont plus courts et deviennent compatibles avec les cycles de fabrication de produits en grande série, tels que les projecteurs de véhicules.

Enfin, grâce à la caractéristique qui est la base de l'invention, la technique de polymérisation par photopolymérisation UV s'avère applicable sans que l'on renonce à une protection optimale de la glace contre la lumière et les UV solaires, en assurant ainsi le maintien des caractéristiques optiques de la glace dans le temps.

Plus précisément, selon une première caractéristique essentielle, l'invention concerne une méthode pour protéger contre les éraflures et les intempéries les glaces en matière plastique synthétique pour projecteurs de véhicules par une couche souple ou flexible présentant une dureté Persoz mesurée selon la norme NFT 30016 inférieure à 120 secondes, ladite méthode comprenant les étapes suivantes :
(1) pré-traitement d'activation de la glace par irradiation
(2) dépôt sur la glace d'une couche d'épaisseur supérieure à 20 µm (mesurée sur film sec) d'une composition polymérisable autocicatrisante mono-composante comprenant :
   (a) au moins un uréthane acrylate en solution dans un monomère de dilution de type monoacrylate,
   (b) un solvant constitué par du diméthoxyméthane,
   (c) une combinaison photoabsorbante UV comprenant au moins une triazine, en combinaison avec une amine à empêchement stérique (HALS) neutre, susceptible de filtrer les radiations de longueurs d'ondes comprises dans un premier intervalle prédéterminé de 280 à 360 nm et d'assurer la protection de la glace contre l'action de la lumière solaire,
   (d) au moins un composé photoinitiateur UV activable par exposition à des radiations comprises dans un deuxième intervalle prédéterminé de longueurs d'ondes, les longueurs d'ondes comprises dans ledit deuxième intervalle étant comprises entre 365 et 415 nm,
   (e) un siloxane photopolymérisable ou hydroxylé,
   ce dépôt étant effectué par projection en deux temps successifs au moins sur ladite surface exposée de la glace.
(3) désolvatation de la couche de vernis protecteur déposée en dernier par chauffage de celle-ci à une température supérieure à 25°C et pour un temps non supérieur à 10 minutes.
(4) photopolymérisation par irradiation de la couche protectrice par des radiations de longueurs d'ondes comprises entre 365 et 415 nm dans le deuxième intervalle prédéterminé de longueurs d'ondes.

Elle concerne également une composition polymérisable transparente comprenant en combinaison :
(a) au moins un uréthane acrylate en solution dans un monomère de dilution de type monoacrylate,
(b) un solvant constitué par du diméthoxyméthane,
(c) une combinaison photoabsorbante UV comprenant au moins une triazine, en combinaison avec un HALS neutre, susceptible de filtrer les radiations de longueurs d'ondes comprises dans un premier intervalle prédéterminé de 280 à 360 nm et d'assurer la protection de la glace contre l'action de la lumière solaire,
(d) au moins un composé photoinitiateur UV activable par exposition à des radiations comprises dans un deuxième intervalle prédéterminé de longueurs d'ondes, les longueurs d'ondes comprises dans ledit deuxième intervalle étant comprises entre 365 et 415 nm,
(e) un siloxane photopolymérisable ou hydroxylé.

Enfin, selon une autre caractéristique essentielle, l'invention concerne l'utilisation de la composition selon l'invention pour protéger contre les éraflures et les intempéries les glaces en matière plastique synthétique, en particulier en polycarbonate, des projecteurs de véhicules.

D'autres caractéristiques et avantages de l'invention apparaîtront de la description qui suit et d'un exemple de réalisation non limitatif de celle-ci.

### 1. Choix du solvant

Le choix du solvant est important pour minimiser l'effet de ramollissement sur les matières sensibles, telles que le polycarbonate, le PVC, l'ABS, etc...

Dans le cas de la présente invention, la matière plastique en laquelle sont réalisées les glaces à protéger, est avantageusement le polycarbonate.

L'expérience acquise par les inventeurs dans le vernissage sur le polycarbonate a permis d'établir que le jaunissement du système "matériau + vernis" est lié directement à l'agressivité du solvant vis-à-vis du substrat. En outre, la retenue du solvant dans la pellicule de vernis peut être évitée par l'usage de solvants les plus légers possibles, en excluant, pour des raisons écologiques, les solvants chlorés. Le solvant utilisé dans la présente invention est employé comme diluant de la composition polymérisable pour pouvoir effectuer son application comme vernis protecteur sur la glace, en particulier le solvant utilisé est le diméthoxyméthane, mieux connu sous le nom de "Méthylal".

En effet, la mesure de l'indice de jaunissement est classiquement effectuée par une technique consistant à mesurer l'indice Δb suivant le référenciel Lab bien connu en colorimétrie.

Il est apparu que le méthylal procure la plus basse valeur de variation de Δb au vieillissement. En effet, en prenant le dichlorométhane comme référence, les valeurs de variation Δb apparaissent distribuées comme suit :
dichlorométhane < Méthylal < acétate de méthyle < Méthyléthylcétone < acétate d'éthyle < acétate d'isobutyle.

La quantité de solvant peut aller de 30 à 50 parties en poids pour 100 parties de composition "sèche", c'est-à-dire sans solvant.

### 2) Choix de la résine

Les résines convenables doivent concilier le compromis dureté-flexibilité-réactivité, pour permettre de répondre aux normes imposées dans le domaine des véhicules, en particulier de l'automobile.

Des résines convenables dans ce but peuvent être aussi bien des polyesters linéaires ou faiblement ramifiés, que des isocyanates aliphatiques modifiés. Sur la base des nombreuses expériences effectuées, ont été sélectionnées des classes de ces résines modifiées avec des terminaisons acryliques.

Selon l'invention, on utilise une résine constituée par au moins un uréthane acrylate.

Cet uréthane acrylate est avantageusement préparé comme expliqué ci-dessous par un mélange d'un prépolymère polyisocyanate avec monoacrylate de diol. On utilise de préférence un isocyanate tel que le DESMODUR-2010 de BAYER, en combinaison avec du monoacrylate de 1,4 butancdiol, en équivalence 1:1 ou 1:0,5, avec une semi-équivalence de blocage de l'isocyanate par le butanol normal. D'autres polymères acryliques terminaux utilisables sont l'hydroxyéthylacrylate et le monoacrylate d'oligocaprolactone linéaire d'un poids équivalent de 240, 344, 480, 690, 940.

### 3) Monomère de dilution

Pour faciliter l'applicabilité des résines protectrices et augmenter la flexibilité du produit final, il est utile d'introduire dans la composition selon l'invention, un monomère acrylique monofonctionnel du genre : acrylate d'éthyl-2 hexyle, acrylate de nonyle, acrylate de phénoxyéthyle, acrylate de cyclohexyle, acrylate de terbutyl-cyclohexyle, monoacrylate de glycérol formal, acrylate de tétrahydrofurfuryle. Le meilleur compromis flexibilité/résistance au déchirement est obtenu avec le TMP formal monoacrylate de pureté équivalente à celle du produit commercial LAROMER-8887 de BASF.

### 4) Préparation de l'oligomère de base

Les résines sont fortement cristallines et conduisent à la formation de cires peu solubles et/ou de microgels insolubles dans les solvants classiques. Pour éviter les solvants qui attaquent les matières sensibles et régulariser la réaction d'acrylation du pré-polymère isocyanate, les composants de la composition sont en solution dans le triméthylol propane formal monoacrylate, qui est présent dans la composition selon l'invention dans des proportions de 30 à 50 % en poids calculées sur le contenu en résine. En particulier, l'oligomère est préparé en solution en utilisant 60 parties de résine pour 35/45 parties de TMP formal.

### 5) Choix de la protection anti UV pour un vernis photopolymérisable

Les systèmes connus qui sont utilisés couramment, sont des combinaisons d'absorbant UV, en particulier de benzotriazole, et de HALS. Les HALS, bien qu'efficaces, provoquent à la suite de réaction d'addition de Michael des colorations jaunes du pré-polymère et nuisent au Δb initial du produit.

Pour augmenter la tenue à la fissuration, on ajoute davantage de HALS, ce qui conduit à l'amplification de ce défaut. En d'autres termes, le gain en résistance à la fissuration conduit à une dégradation incompatible avec les applications optiques.

Les absorbeurs d'UV sont toujours utilisés en combinaison avec des HALS ou "amines empêchées" qui améliorent la tenue à la fissuration du revêtement.

Les classes d'absorbeurs d'UV les plus couramment utilisés sont les dihydroxybenzophénones et les benzotriazoles. On utilise également les triazines pour assurer cette fonction.

Dans le cas de la présente invention, le meilleur compromis a été trouvé avec la famille des triazines et plus particulièrement avec la triazine répondant à la formule ci-dessous :

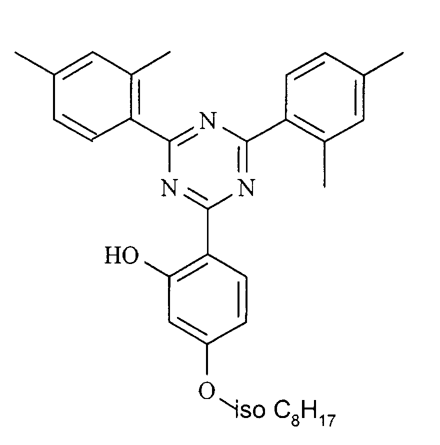

Les HALS à terminaison amine provoquent des réactions secondaires indésirables par addition de Michael sur les doubles liaisons du vernis UV. Pour cette raison, on utilise de préférence selon l'invention des triazines en présence d'une amine de la famille des HALS neutres. De tels HALS sont en particulier connus pour les vernis à catalyse acide.

La composition polymérisable protectrice selon l'invention inclut de préférence des composés stabilisants photoabsorbants à base de triazines combinées avec des HALS neutres, tels que par exemple TBO2 commercialisé par la société SANDOZ, qui ont un spectre d'absorption optimal pour des rayonnements de longueurs d'ondes comprises entre 280 et 360 nm et qui peuvent arriver jusqu'à 370 nm. La quantité de ces substances présentes dans la composition selon l'invention oscille entre 1 % et 3 % en poids.

Selon la caractéristique principale de l'invention pour photopolymériser en présence de photoabsorbants UV, on utilise des photo-initiateurs activables même (ou seulement) par des radiations de longueurs d'ondes comprises dans un intervalle prédéterminé, et de toute façon supérieures à celles qui sont absorbées par les photoabsorbants. Bien naturellement, un faible chevauchement de longueurs d'ondes entre les deux intervalles, aux alentours de 360/370 nm, par exemple, est possible et pratiquement inoffensif et ne sort pas du domaine de la présente invention. En l'espèce, étant en présence d'oligomères uréthaniques, les produits présents sur le marché qui satisfont cette limitation sont VICURE-55 (de la Société STAUFFER) ou PI 3000 (de la Société RAHN), utilisés en combinaison avec LUCERIN-TEPO (8893x) de BASF dans le rapport 2:1 et pour un contenu total variable de 2,5 à 4,5 % en poids du total de la composition.

### 6) Protection contre les salissures

Sur le plan expérimental, il a été remarqué que les revêtements protecteurs très flexibles présentent l'inconvénient d'être peu ou pas du tout glissants et de retenir pour cette raison la saleté qui s'y dépose, ce qui, pendant l'usage, peut accélérer la dégradation superficielle de la couche protectrice. Selon l'invention, on pallie cet inconvénient en incluant également dans la composition un siloxane photopolymérisable ou hydroxylé, lequel accroît fortement le caractère glissant de la surface de la couche. On utilise avantageusement les produits EFKA-83 ou 88, BYK-371 et TEGO-LA148. Le meilleur compromis est obtenu notamment en utilisant EFKA-33 et EFKA-88 dans la proportion 1:1, en quantités comprises entre 3 et 5 % en poids sur le total de la composition.

### 7) Procédé d'application

La composition polymère protectrice décrite est appliquée sur une glace en polycarbonate, en particulier au moins sur une surface de celle-ci qui, pendant l'usage, est exposée à l'extérieur du projecteur, de la façon suivante :
- on effectue en premier lieu un pré-traitement d'activation de la glace, et plus précisément d'au moins la surface exposée de celle-ci, par irradiation UV effectuée de façon à décharger sur la glace une énergie non inférieure à 7 joules/cm². Cette irradiation est effectuée à l'aide de lampes traditionnelles à moyenne pression (HOK2 de PHILIPS, par exemple, ou équivalentes) travaillant autour de la longueur d'onde de 365 nm,
- ensuite, on effectue le dépôt sur la glace d'une couche d'épaisseur supérieure à 20 microns avantageusement comprise entre 20 et 30 microns (mesurés sur film sec) de la composition polymérisable monocomposante décrite ci-dessus, en effectuant le dépôt, au moins sur ladite surface exposée de la glace, par projection, en deux temps successifs (en pratique, on applique deux couches de vernis protecteur),
- on effectue une désolvatation de la couche de vernis protecteur déposée en dernier par chauffage de celle-ci à une température supérieure à 25 °C et pour un temps non supérieur à 10 mn. De préférence, on travaille dans un four à une température de 50°C et pendant 5 mn,
- ensuite, on effectue l'étape de photopolymérisation, cette étape, selon l'invention, étant effectuée par irradiation de la couche de composition protectrice appliquée sur la glace par des radiations de longueurs d'ondes comprises entre 365 et 415 nm. Cette étape est effectuée, par exemple, à l'aide d'une lampe à mercure chargée à l'iodure de plomb (lampe Hg-Pb de PHILIPS), de façon à décharger sur la couche, en cours de polymérisation, une énergie totale comprise entre 1,6 et 2 J/cm².
- enfin, on effectue encore une cuisson au four pendant 10 minutes à 130°C en vue de compléter la polymérisation.

De préférence, avant l'étape d'irradiation, et après l'étape de désolvatation, on effectue également une étape de tension de la couche de composition polymérisable protectrice appliquée à la glace. Cette étape de tension est avantageusement réalisée par une irradiation de la couche par des rayons infrarouges moyens émis par une lampe émettrice de radiations comprises entre 2,5 et 3 microns, par exemple une lampe de la société FRANCE RAYONNEMENT avec une puissance rayonnée de 14 kW/m² environ.

L'exemple de réalisation pratique qui suit illustre de façon non limitative l'invention.

### EXEMPLE

On prépare la résine de base (résine DL18) en mélangeant les composants suivants dans les proportions indiquées (exprimées en grammes) :

| | |
|---|---|
| DESMODUR 2010 (BAYER) | 44,7 |
| Monoacrylate de butanediol | 15,3 |
| TMP formal (LAROMER 8887) | 38, 4 |
| Dibutyl-dilaurate | 0,152 |
| Acétate d'éthyle | 1,368 |

Ensuite, on mélange la résine de base aux autres composants suivants, dans les proportions indiquées au tableau 1, de façon à obtenir deux compositions différentes (indiquées comme comp. 1 et comp. 2), susceptibles d'être appliquées comme vernis :

**TABLEAU 1**

| **Composants** | **Comp. 1 (g)** | **Comp. 2 (g)** |
|---|---|---|
| Résine de base (DL 18) | 75 | 85 |
| TB02 | 2 | 4 |
| Vicure55/TEPO-mélange 2:1 | 2 | 5 |
| EFKA-83 | 1 | 1 |
| EFKA-88 | 1 | 3 |
| SARBOX400 (*) | 3 | 6 |
| METHYLAL | 30 | 60 |

| | | |
|---|---|---|
| (*) = acide polyméthacrylique en solution à 70% dans le méthoxypropanol | | |

Les compositions du tableau 1 sont appliquées sur des glaces témoin en polycarbonate par couches de 20 et 30 microns d'épaisseur pour les compositions 1 et 2, respectivement par projection en deux couches successives, après irradiation préalable des glaces nues par des UV à la fréquence de 365 nm, effectuée pendant des durées suffisantes pour décharger sur les glaces une énergie de 7J/cm². Les glaces en polycarbonate vernies sont ensuite maintenues dans un four à 50°C pendant 5mn ou à 25°C pendant 10 mn avec une vitesse d'air de 0,5 m/seconde avant d'être soumises à un traitement d'irradiation IR pendant 10 secondes.

Enfin, on effectue la photopolymérisation du vernis par irradiation UV effectuée à l'aide d'une lampe Hg-Pb capable d'émettre des radiations comprises entre 365 et 415 nm de longueurs d'ondes et on complète celle-ci par cuisson au four à 130°C pendant 10 mn.

Les couches protectrices polymérisées obtenues avec les deux compositions préparées sont hautement flexibles, transparentes, résistantes et bien adhérentes à la surface de polycarbonate.

Le tableau 2 ci-dessous donne les résultats des tests effectués selon la norme ISO 11341 sur deux supports en polycarbonate revêtus respectivement d'une couche de vernis selon l'invention de 30 µm, appliquée dans les conditions décrites ci-dessus.

**TABLEAU 2**

| | Δb à 500h | Δb à 1000h | Δb à 1500h | Δb à 2000h | Δb à 3000h | Δb à 4000h | Rétention brillant à 4000h | Δb à 5000h | Rétention brillant à 5000h |
|---|---|---|---|---|---|---|---|---|---|
| Comp. 1 | -0,8 | -0,6 | -0,3 | -0,2 | 0,1 | 0,3 | 96 % | 0,8 | 91 |
| Comp. 2 | -0,2 | -0,4 | -0,1 | 0,2 | 0,3 | 0,4 | 96 % | 0,6 | 90 |

## Revendications

1. Méthode pour protéger contre les éraflures et les intempéries les glaces en matière plastique synthétique pour projecteurs de véhicules par une couche souple ou flexible présentant une dureté Persoz mesurée selon la norme NFT 30016 inférieure à 120 secondes, ladite méthode comprenant les étapes suivantes :
(1) pré-traitement d'activation de la glace par irradiation
(2) dépôt sur la glace d'une couche d'épaisseur supérieure à 20 µm (mesurée sur film sec) d'une composition polymérisable autocicatrisante mono-composante comprenant :
(a) au moins un uréthane acrylate en solution dans un monomère de dilution de type monoacrylate,
(b) un solvant constitué par du diméthoxyméthane,
(c) une combinaison photoabsorbante UV comprenant au moins une triazine, en combinaison avec une amine à empêchement stérique (HALS) neutre, susceptible de filtrer les radiations de longueurs d'ondes comprises dans un premier intervalle prédéterminé de 280 à 360 nm et d'assurer la protection de la glace contre l'action de la lumière solaire,
(d) au moins un composé photoinitiateur UV activable par exposition à des radiations comprises dans un deuxième intervalle prédéterminé de longueurs d'ondes, les longueurs d'ondes comprises dans ledit deuxième intervalle étant comprises entre 365 et 415 nm,
(e) un siloxane photopolymérisable ou hydroxylé,
ce dépôt étant effectué par projection en deux temps successifs au moins sur ladite surface exposée de la glace.
(3) désolvatation de la couche de vernis protecteur déposée en dernier par chauffage de celle-ci à une température supérieure à 25°C et pour un temps non supérieur à 10 minutes.
(4) photopolymérisation par irradiation de la couche protectrice par des radiations de longueurs d'ondes comprises entre 365 et 415 nm dans le deuxième intervalle prédéterminé de longueurs d'ondes.

2. Méthode selon la revendication 1, **caractérisée en ce que** lesdites glaces sont constitués de polycarbonate.

3. Méthode selon l'une des revendications 1 ou 2, **caractérisée en ce que** ledit pré-traitement d'activation de la glace est effectué de façon à décharger sur la glace une énergie inférieure à 7 joules/cm².

4. Méthode selon l'une des revendications 1 à 3, **caractérisée en ce que** ledit monomère de dilution de type monoacrylate est choisi dans le groupe constitué de l'acrylate d'éthyl-2 hexyle, de l'acrylate de nonyle, de l'acrylate de phénoxyéthyle, de l'acrylate de cyclohexyle, de l'acrylate de terbutyl-cyclohexyle, du monoacrylate de glycérol formal, de l'acrylate de tétrahydrofurfuryle et du triméthylol propane formal monoacrylate (TMP formal monoacrylate).

5. Méthode selon la revendication 4, **caractérisée en ce que** ledit monomère de dilution est le TMP formai monoacrylate.

6. Méthode selon la revendication 5, **caractérisée en ce que** ledit monomère de dilution est constitué par du triméthylol propane formai monoacrylate dans des proportions de 30 à 50 % en poids calculées sur le contenu de la résine.

7. Méthode selon l'une des revendications 1 à 6, **caractérisée en ce que** l'épaisseur de la couche (mesurée sur film sec), est supérieure à 25 µm, de préférence comprise entre 25 et 35 µm.

8. Méthode selon l'une des revendications 1 à 7, **caractérisée en ce que** ladite étape de polymérisation est effectuée par irradiation de la glace et de ladite composition déposée sur celle-ci à l'aide d'une lampe à mercure chargée d'iodure de plomb.

9. Méthode selon l'une des revendications 1 à 8, **caractérisée en ce qu'**elle comprend en outre une étape (5) de cuisson au four pour compléter la polymérisation.

10. Méthode selon l'une des revendications 1 à 9, **caractérisée en ce que** l'on utilise une glace en polycarbonate et **en ce qu'**elle comprend, en combinaison, les étapes suivantes :
- pré-traitement d'activation au moins de ladite surface exposée de la glace par irradiation UV de la glace à l'aide de lampes opérant à une longueur d'onde de 365 nm environ,
- dépôt sur la glace par projection en deux temps successifs d'une couche d'au moins 20 µm (mesurée sur film sec) de ladite composition polymérisable monocomposante,
- désolvatation de ladite couche par chauffage de celle-ci à une température supérieure à 25°C et pour un temps non supérieur à 10 mn,
- irradiation de la couche par des rayonnements de longueurs d'ondes comprises entre 365 et 415 nm,
- cuisson au four.

11. Méthode selon la revendication 10, **caractérisée en ce que**, avant l'étape d'irradiation et après l'étape de désolvatation, on effectue une étape de tension de la couche de ladite composition polymérisable appliquée à la glace, ladite étape de tension étant constituée par une irradiation de la couche aux infrarouges.

12. Méthode selon la revendication 11, **caractérisée en ce que** ladite irradiation à l'infrarouge est effectuée de façon à irradier sur la couche de vernis une énergie de 14 kW/m² en 10 secondes.

13. Méthode selon l'une des revendications 1 à 12, **caractérisée en ce que** ladite étape de pré-traitement est effectuée de façon à décharger sur la glace une énergie non inférieure à 7 joule/cm² et **en ce que** ladite étape d'irradiation pour obtenir la polymérisation est effectuée de façon à décharger sur ladite couche une énergie comprise entre 1,6 et 2J/cm².

14. Composition polymérisable transparente comprenant en combinaison :
(a) au moins un uréthane acrylate en solution dans un monomère de dilution de type monoacrylate,
(b) un solvant constitué par du diméthoxyméthane,
(c) une combinaison photoabsorbante UV comprenant au moins une triazine, en combinaison avec un HALS neutre, susceptible de filtrer les radiations de longueurs d'ondes comprises dans un premier intervalle prédéterminé de 280 à 360 nm et d'assurer la protection de la glace contre l'action de la lumière solaire,
(d) au moins un composé photoinitiateur UV activable par exposition à des radiations comprises dans un deuxième intervalle prédéterminé de longueurs d'ondes, les longueurs d'ondes comprises dans ledit deuxième intervalle étant comprises entre 365 et 415 nm,
(e) un siloxane photopolymérisable ou hydroxylé.

15. Composition selon la revendication 14, **caractérisée en ce que** ledit monomère de dilution de type monoacrylate est choisi dans le groupe constitué de l'acrylate d'éthyl-2 hexyle, de l'acrylate de nonyle, de l'acrylate de phénoxyéthyle, de l'acrylate de cyclohexyle, de l'acrylate de terbutyl-cyclohexyle, du monoacrylate de glycérol formai, de l'acrylate de tétrahydrofurfuryle et du triméthylol propane formai monoacrylate (TMP formai monoacrylate).

16. Composition selon la revendication 15, **caractérisée en ce que** ledit monomère de dilution est le TMP formai monoacrylate.

17. Composition selon la revendication 16, **caractérisée en ce que** ledit monomère de dilution est constitué par du TMP formai monoacrylate dans des proportions de 30 à 50 % en poids calculées sur le contenu de la résine.

18. Composition selon l'une des revendications 14 à 17, **caractérisée en ce que** ledit uréthane acrylate est préparé par mélange d'un prépolymère polyisocyanate avec un monoacrylate de diol.

19. Composition selon l'une des revendications 14 à 18, **caractérisé en ce que** ladite triazine répond à la formule

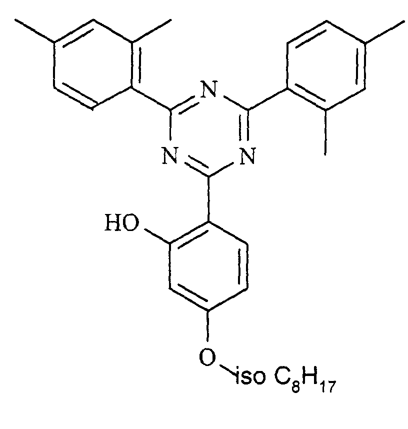

20. Composition polymérisable selon l'une des revendications 14 à 19, **caractérisé en ce que** ces différents composants à l'exception du diméthoxyméthane sont en solution dans ledit monoacrylate, la fonction de diluant pour l'application de la composition polymérisable étant assurée par le diméthoxyméthane.

21. Utilisation d'une composition selon l'une des revendications 14 à 20 pour protéger contre les éraflures et les intempéries les glaces en matière plastique synthétique, en particulier en polycarbonate, des projecteurs de véhicules.

## Patentansprüche

1. Verfahren zum Schützen von Kunststoffscheiben für Fahrzeugscheinwerfer gegen Kratzer und Witterungseinflüsse durch eine elastische oder flexible Schicht mit einer Persoz-Härte gemäß NFT-Norm 30016 von weniger als 120 Sekunden, bei dem man:
(1) die Scheibe durch Bestrahlung aktivierend vorbehandelt,
(2) auf die Scheibe eine Schicht aus einer einkomponentigen selbstheilenden polymerisierbaren Zusammensetzung in einer Trockenschichtdicke von mehr als 20 *µ*m aufbringt, die
(a) mindestens ein Urethanacrylat in Lösung in einem Monoacrylat-Verdünnungsmonomer,
(b) Dimethoxymethan als Lösungsmittel,
(c) eine UV-lichtabsorbierende Kombination, die mindestens ein Triazin in Kombination mit einem neutralen sterisch gehinderten Amin (HALS) enthält und Strahlung mit einer Wellenlänge in einem vorgegebenen ersten Bereich von 280 bis 360 nm herausfiltern und den Schutz der Scheibe gegen die Einwirkung von Sonnenlicht gewährleisten kann,
(d) mindestens einen UV-Photoinitiator, der durch Einwirkung von Strahlung in einem vorgegebenen zweiten Wellenlängenbereich zwischen 365 und 415 nm aktivierbar ist, und
(e) ein photopolymerisierbares oder hydroxyliertes Siloxan,
enthält, wobei das Aufbringen durch Aufspritzen auf die exponierte Oberfläche der Scheibe in mindestens zwei aufeinanderfolgenden Arbeitsgängen erfolgt,
(3) zum Austreiben des Lösungsmittels die zuletzt aufgebrachte Schutzlackschicht über einen Zeitraum von nicht mehr als 10 Minuten auf eine Temperatur von mehr als 25°C erhitzt und
(4) die Schutzschicht durch Bestrahlen mit Strahlung mit einer Wellenlänge zwischen 365 und 415 nm in dem vorgegebenen zweiten Wellenlängenbereich photopolymerisiert.

2. Verfahren nach Anspruch 1, **dadurch gekennzeichnet, daß** die Scheiben aus Polycarbonat bestehen.

3. Verfahren nach Anspruch 1 oder 2, **dadurch gekennzeichnet, daß** man die aktivierende Vorbehandlung der Scheibe durch Beaufschlagen der Scheibe mit einer Energie von weniger als 7 Joule/cm² durchführt.

4. Verfahren nach einem der Ansprüche 1 bis 3, **dadurch gekennzeichnet, daß** man das Monoacrylat-Verdünnungsmonomer aus der Gruppe bestehend aus 2-Ethylhexylacrylat, Nonylacrylat, Phenoxyethylacrylat, Cyclohexylacrylat, tert.-Butylcyclohexylacrylat, Glycerinformalmonoacrylat, Tetrahydrofurfurylacrylat und Trimethylolpropanformalmonoacrylat (TMP-Formalmonoacrylat) auswählt,

5. Verfahren nach Anspruch 4, **dadurch gekennzeichnet, daß** man als Verdünnungsmonomer TMP-Formalmonoacrylat einsetzt.

6. Verfahren nach Anspruch 5, **dadurch gekennzeichnet, daß** man als Verdünnungsmonomer Trimethylolpropanformalmonoacrylat in einer Menge von 30 bis 50 Gew.-%, bezogen auf den Harzgehalt, einsetzt.

7. Verfahren nach einem der Ansprüche 1 bis 6, **dadurch gekennzeichnet, daß** die Schicht eine Trockenschichtdicke von mehr als 25 *µ*m, vorzugsweise zwischen 25 und 35 *µ*m, aufweist.

8. Verfahren nach einem der Ansprüche 1 bis 7, **dadurch gekennzeichnet, daß** man die Polymerisation durch Bestrahlung der Scheibe und der darauf aufgebrachten Zusammensetzung mit einer mit Bleiiodid beschickten Quecksilberlampe durchführt.

9. Verfahren nach einem der Ansprüche 1 bis 8, **dadurch gekennzeichnet, daß** es außerdem auch noch einen Einbrennschritt (5) zur Vervollständigung der Polymerisation aufweist.

10. Verfahren nach einem der Ansprüche 1 bis 9, **dadurch gekennzeichnet, daß** man eine Polycarbonatscheibe verwendet und:
- zumindest die exponierte Oberfläche der Scheibe durch UV-Bestrahlung der Scheibe mit Lampen mit einer Betriebswellenlänge von etwa 365 nm aktivierend vorbehandelt,
- auf die Scheibe durch Aufspritzen in zwei aufeinanderfolgenden Arbeitsgängen eine Schicht aus der einkomponentigen polymerisierbaren Zusammensetzung in einer Trockenschichtdicke von mindestens 20 *µ*m aufbringt,
- zum Austreiben des Lösungsmittels die Schicht über einen Zeitraum von nicht mehr als 10 min auf eine Temperatur von mehr als 25°C erhitzt,
- die Schicht mit Strahlung mit einer Wellenlänge zwischen 365 und 415 nm bestrahlt und
- einbrennt.

11. Verfahren nach Anspruch 10, **dadurch gekennzeichnet, daß** man vor der Bestrahlung und nach dem Austreiben des Lösungsmittels die Schicht aus der auf die Scheibe aufgebrachten polymerisierbaren Zusammensetzung unter Spannung setzt, indem man die Schicht mit Infrarotstrahlung bestrahlt.

12. Verfahren nach Anspruch 11, **dadurch gekennzeichnet, daß** man bei der Infrarotbestrahlung die Lackschicht 10 Sekunden mit einer Energie von 14 kW/m² bestrahlt.

13. Verfahren nach einem der Ansprüche 1 bis 12, **dadurch gekennzeichnet, daß** man bei der Vorbehandlung die Scheibe mit einer Energie von mindestens 7 Joule/cm² beaufschlagt und bei der Bestrahlung zwecks Polymerisation die Schicht mit einer Energie zwischen 1,6 und 2 J/cm² beaufschlagt.

14. Transparente polymerisierbare Zusammensetzung, enthaltend:
(a) mindestens ein Urethanacrylat in Lösung in einem Monoacrylat-Verdünnungsmonomer,
(b) Dimethoxymethan als Lösungsmittel,
(c) eine UV-lichtabsorbierende Kombination, die mindestens ein Triazin in Kombination mit einer neutralen HALS-Verbindung enthält und Strahlung mit einer Wellenlänge in einem vorgegebenen ersten Bereich von 280 bis 350 nm herausfiltern und den Schutz der Scheibe gegen die Einwirkung von Sonnenlicht gewährleisten kann,
(d) mindestens einen UV-Photoinitiator, der durch Einwirkung von Strahlung in einem vorgegebenen zweiten Wellenlängenbereich zwischen 365 und 415 nm aktivierbar ist, und
(e) ein photopolymerisierbares oder hydroxyliertes Siloxan.

15. Zusammensetzung nach Anspruch 14, **dadurch gekennzeichnet, daß** das Monoacrylat-Verdünnungsmonomer aus der Gruppe bestehend aus 2-Ethylhexylacrylat, Nonylacrylat, Phenoxyethylacrylat, Cyclohexylacrylat, tert.-Butylcyclohexylacrylat, Glycerinformalmonoacrylat, Tetrahydrofurfurylacrylat und Trimethylolpropanformalmonoacrylat (TMP-Formalmonoacrylat) stammt.

16. Zusammensetzung nach Anspruch 15, **dadurch gekennzeichnet, daß** es sich bei dem Verdünnungsmonomer um TMP-Formalmonoacrylat handelt.

17. Zusammensetzung nach Anspruch 16, **dadurch gekennzeichnet, daß** es sich bei dem Verdünnungsmonomer um TMP-Formalmonoacrylat in einer Menge von 30 bis 50 Gew*-%. bezogen auf den Harzgehalt, handelt.

18. Zusammensetzung nach einem der Ansprüche 14 bis 17, **dadurch gekennzeichnet, daß** das Urethanacrylat durch Mischen eines Polyisocyanat-Prepolymers mit einem Diolmonoacrylat hergestellt wird.

19. Zusammensetzung nach einem der Ansprüche 14 bis 18, **dadurch gekennzeichnet, daß** das Triazin der Formel 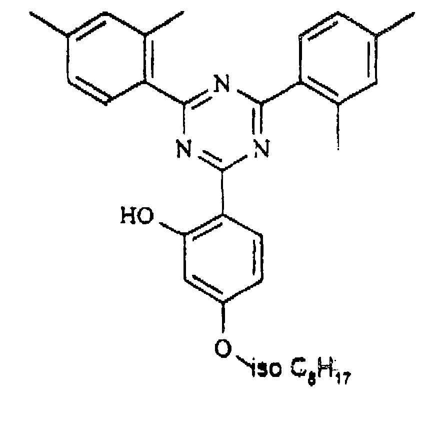 entspricht.

20. Polymerisierbare Zusammensetzung nach einem der Ansprüche 14 bis 19, **dadurch gekennzeichnet, daß** diese verschiedenen Bestandteile mit Ausnahme des Dimethoxymethans in dem Monoacrylat gelöst sind, wobei das Dimethoxymethan die Funktion des Verdünnungsmittels für die Applikation der polymerisierbaren Zusammensetzung übernimmt.

21. Verwendung einer Zusammensetzung nach einem der Ansprüche 14 bis 20 zum Schützen von Scheiben aus Kunststoff, insbesondere Polycarbonat, von Fahrzeugscheinwerfern gegen Kratzer und Witterungseinflüsse.

## Claims

1. A process for protecting sheets made from synthetic plastic material for vehicle headlamps from scratching and weathering by a pliable or flexible layer having a Persoz hardness of less than 120 seconds as measured in accordance with NFT standard 30016, which process comprises the following steps:
(1) activating pretreatment of the sheet by irradiation,
(2) depositing on the sheet a layer having a dry film thickness of more than 20 µm and consisting of a one-component self-healing polymerizable composition comprising:
(a) at least one urethane acrylate dissolved in a monoacrylate diluent monomer,
(b) a solvent consisting of dimethoxymethane,
(c) a UV light-absorbing combination comprising at least one triazine in combination with a neutral sterically hindered amine (HALS) which can filter radiation of a wavelength in a predetermined first range of from 280 to 360 nm and ensure protection of the sheet from the action of sunlight,
(d) at least one UV photoinitiator activatable by exposure to radiation in a predetermined second wavelength range between 365 and 415 nm, and
(e) a photopolymerizable or hydroxylated siloxane,
said deposition being carried out by spray-coating the exposed surface of the sheet in at least two successive stages,
(3) removing the solvent from the protective varnish layer which has been deposited last by heating the latter to a temperature of more than 25°C and for no more than 10 minutes, and
(4) photopolymerizing by irradiating the protective layer with radiation of a wavelength between 365 and 415 nm in the predetermined second wavelength range.

2. The process as claimed in claim 1, wherein said sheets are made of polycarbonate.

3. The process as claimed in claim 1 or 2, wherein said activating pretreatment of the sheet involves applying an energy of less than 7 joules/cm² to the sheet.

4. The process as claimed in any of claims 1 to 3, wherein said monoacrylate diluent monomer is selected from the group consisting of 2-ethylhexyl acrylate, nonyl acrylate, phenoxyethyl acrylate, cyclohexyl acrylate, tert-butylcyclohexyl acrylate, glycerol formal monoacrylate, tetrahydrofurfuryl acrylate and trimethylolpropane formal monoacrylate (TMP formal monoacrylate).

5. The process as claimed in claim 4, wherein said diluent monomer is TMP formal monoacrylate.

6. The process as claimed in claim 5, wherein said diluent monomer comprises trimethylolpropane formal monoacrylate in a proportion of from 30 to 50% by weight, based on the resin content.

7. The process as claimed in any of claims 1 to 6, wherein the layer has a dry film thickness of more than 25 µm, preferably between 25 und 35 µm.

8. The process as claimed in any of claims 1 to 7, wherein said polymerization step is carried out by irradiating the sheet and said composition deposited thereon by means of a mercury lamp charged with lead iodide.

9. The process as claimed in any of claims 1 to 8, wherein the process further includes a baking step (5) to complete the polymerization.

10. The process as claimed in any of claims 1 to 9, wherein a polycarbonate sheet is used and which comprises, in combination, the following steps:
- activating pretreatment of at least said exposed surface of the sheet by UV irradiation of the sheet by means of lamps operating at a wavelength of about 365 nm,
- spray-coating of the sheet, in two successive stages, with a layer of said one-component polymerizable composition having a dry film thickness of at least 20 µm,
- removing the solvent from said layer by heating the latter to a temperature of more than 25°C and for no more than 10 min,
- irradiating the layer with radiation of a wavelength between 365 and 415 nm, and
- baking.

11. The process as claimed in claim 10, wherein a step of tensioning the layer of said polymerizable composition applied to the sheet is performed prior to the irradiation step and after the solvent removal step, which tensioning step consists of an irradiation of the layer with infrared radiation.

12. The process as claimed in claim 11, wherein said infrared irradiation is performed by irradiating the varnish layer with an energy of 14 kW/m² over 10 seconds.

13. The process as claimed in any of claims 1 to 12, wherein said pretreament step is performed by applying to the sheet an energy of at least 7 joules/cm² and wherein said irradiation step for achieving the polymerization is performed by applying to said layer an energy between 1.6 and 2 J/cm².

14. A transparent polymerizable composition comprising, in combination:
(a) at least one urethane acrylate dissolved in a monoacrylate diluent monomer,
(b) a solvent consisting of dimethoxymethane,
(c) a UV light-absorbing combination comprising at least one triazine in combination with a neutral sterically hindered amine (HALS) which can filter radiation of a wavelength in a predetermined first range of from 280 to 360 nm and ensure protection of the sheet from the action of sunlight,
(d) at least one UV photoinitiator activatable by exposure to radiation in a predetermined second wavelength range between 365 and 415 nm, and
(e) a photopolymerizable or hydroxylated siloxane.

15. The composition as claimed in claim 14, wherein said monoacrylate diluent monomer is selected from the group consisting of 2-ethylhexyl acrylate, nonyl acrylate, phenoxyethyl acrylate, cyclohexyl acrylate, tert-butylcyclohexyl acrylate, glycerol formal monoacrylate, tetrahydrofurfuryl acrylate and trimethylolpropane formal monoacrylate (TMP formal monoacrylate).

16. The composition as claimed in claim 15, wherein said diluent monomer is TMP formal monoacrylate.

17. The composition as claimed in claim 16, wherein said diluent monomer comprises TMP formal monoacrylate in a proportion of from 30 to 50% by weight, based on the resin content.

18. The composition as claimed in any of claims 14 to 17, wherein said urethane acrylate is prepared by mixing a polyisocyanate prepolymer with a diol monoacrylate.

19. The composition as claimed in any of claims 14 to 18, wherein said triazine corresponds to the formula

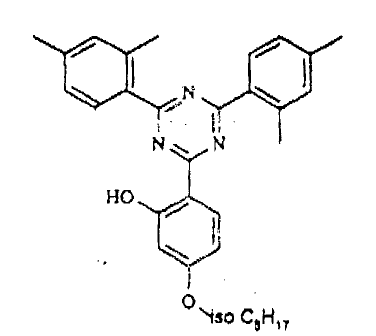

20. The polymerizable composition as claimed in any of claims 14 to 19, wherein the different components, with the exception of the dimethoxymethane, are dissolved in said monoacrylate, the diluent function for the application of the polymerizable composition being provided by the dimethoxymethane.

21. The use of a composition as claimed in any of claims 14 to 20 for protecting sheets made from synthetic plastic material, in particular polycarbanate, of vehicle headlamps from scratching and weathering.
